# EUROPEAN PATENT SPECIFICATION

(11) **EP 4 458 567 B1**
(45) Date of publication and mention of the grant of the patent: **04.03.2026**
(21) Application number: 23171421.3
(22) Date of filing: 03.05.2023
(51) Int. Cl.: B29C 70/54, B29C 70/44

(54) **OUT-OF-AUTOCLAVE THERMOPLASTIC CONSOLIDATION APPARATUS AND METHOD**
VORRICHTUNG UND VERFAHREN ZUR THERMOPLASTISCHEN KONSOLIDIERUNG AUSSERHALB EINES AUTOKLAVEN
APPAREIL ET PROCÉDÉ DE CONSOLIDATION THERMOPLASTIQUE HORS AUTOCLAVE

(43) Date of publication of application: 06.11.2024
(73) Proprietor: Fokker Aerostructures B.V., 3351 NL Papendrecht (NL)
(72) Inventor: VAN INGEN, Jaap Willem, 3351 NL Papendrecht (NL)
(74) Representative: D Young & Co LLP

(56) References cited:
- US-A- 5 820 894
- US-A1- 2017 036 310

## Description

### Background

The present invention is concerned with a system and method for the co-consolidation of thermoplastic materials. Specifically, but not exclusively, an apparatus and method described herein allows the co-consolidation of thermoplastic stiffened skins used, for example, for aerodynamic structures.

Co-consolidation of thermoplastic skins with stiffeners is the process of co-joining a skin and a stiffening rib in a single step. This is conventionally performed by placing the components to be co-joined into an autoclave which heats the components and causes the resins in the pre-impregnated materials to join together This process uses a vacuum bag arrangement into which the part is positioned. In use the vacuum bag generates an even pressure on the part to ensure good consolidation and a high quality finished product. Vacuum bags are labour intensive to apply and remove and generate waste material as they are disposed after use but are an essential part of existing manufacturing technique that are required to form high performance components such as those used in aerospace.

The inventor has established an alternative approach to co-consolidation of components which removes the need for an autoclave and vacuum bag arrangement. Specifically, the inventor has devised an arrangement in which a heated press tool can be used. Conventional heated press tooling does not allow for an even pressure distribution as conventionally achieved in a vacuum bag process. However, the inventor has established an apparatus and technique that negates the need for an autoclave and vacuum bag arrangement whilst maintaining a high quality product.

Furthermore, the apparatus and method described herein advantageously reduces energy consumption and waste materials generation. Still further according to a process and apparatus described herein the process cycle time can be significantly reduced thereby making it a process suitable for high rate production.

US 5,820,894 A refers to a method and apparatus for consolidating a workpiece at elevated temperature.

### Summary of the Invention

Aspects of the invention are set out in the accompanying claims.

Viewed from a first aspect of an invention described herein, there is provided an out-of-autoclave (OOA) thermoplastic consolidation apparatus as defined in claim 1.

The term Out-of-Autoclave (OOA) is a term understood by those skilled in the art and refers to a process of consolidating a thermoplastic part without using an autoclave. Use of autoclaves to consolidate thermoplastic parts is expensive and time consuming because of the thermal inertial of the large autoclaves that are used. Loading and un-loading of autoclaves is additionally labour intensive and time consuming.

According to the apparatus and method described herein a simple and reliable co-consolidation arrangement is provided. The arrangement is simpler to load with pre-impregnated materials that are to be consolidated together, uses less energy and importantly offers faster cycle times because of the advantageously lower thermal inertia of the forming equipment.

The acronym CRES is known in the art to indicate a Corrosion Resistant Steel.

According to an apparatus and method described herein a heated press can be used in combination with an expandable bladder, a cres bladder, to generate a biasing pressure during the consolidation process to achieve the same effect at that of the gas pressure achieved in an autoclave. Advantageously the expandable bladder described herein is reusable, reducing waste, and comprises a high pressure integrated seal (as described below) to allow for a variety of pressures to be applied to a part during heating and consolidation.

Specifically, the pair of opposing flexible surfaces and a peripherally extending seal allow for a near hydrostatic pressure to be applied to an upper surface of the removable caul plate. The flexible nature of the expandable bladder means that the bladder and upper surface of the caul plate does not need to be manufactured to very tight tolerances reducing the manufacturing costs of the tooling and allowing for a uniform pressure to be applied across the tool and across the consolidating part.

Advantageously the removable caul plate (that is the rigid or semi-rigid member that is placed over the part to be consolidated and used to apply pressure and geometry to the part being consolidated) allows the plies and sub-components forming the desired part to be laid-up (laid is also referred to in the art as 'layed') on the lower tool surface. The expandable bladder means that only the geometry of the side of the caul plate in contact with the part required high accuracy.

Advantageously bladder manufacturing irregularities like welds in cases of large bladders or accidental dents in the thin sheets of the bladder are not transferred into the product as the product surface is created by the removable semi rigid caul plate.

The expandable bladder is advantageously arranged to overlap with the edges of the caul plate and to terminate between the peripheral zones of the upper and lower tools i.e. where the upper and lower tools come into contact around the central zone in which the part is formed. This advantageously ensures that the entire caul plate received a biasing pressure through expansion of the expandable bladder. Additionally the compressive forces of the tools being brought together locates the bladder security and prevents any movement of bladder and caul plate during the consolidation process.

The expandable bladder is in the form of two opposing layers defining a space or chamber therebetween into which a gas or fluid can be introduced. Introducing a gas or fluid into the space causes the two surface to move apart. This in turn applies a pressure to the upper tool on one side and to the caul plate on the other. Since the two tools are coupled together this increase in pressure within the chamber biases the caul plate against the lower tool.

The expandable bladder may be pressurised to cause the biasing effect by introducing a gas or fluid through an inlet/outlet port in gas or fluid communication with the expansion chamber. A gas or fluid can then ingress and egress to/from the chamber. The gas or fluid itself may be any suitable medium able to withstand elevated temperature. Advantageously simple compressed air may be used either from a compressor system of gas bottle as it can be connected and disconnected quickly without fluid leakage.

The layers forming the expandable bladder may be formed of any suitable material. For consolidation requiring heated tooling the layers may advantageously be formed of a metal such as stainless steel.

Other suitable materials may include durable weldable metallic sheets such as steel, plated steel, Invar steel or titanium.

The expandable chamber may be formed by sealing the perimeter (or a region of the periphery of the two opposing surfaces) of the two flexible layers. Because a metal may be used the seal may advantageously be created using a weld bead. The weld may advantageously be formed using a laser welding technique which allows the thin flexible layers to be welded together. Furthermore, a laser weld allows a shallow weld bead to be formed so as not to interfere with the surfaces of the upper and lower tools as they are brought together over the expandable bladder.

The weld may be located at the very perimeter of the expandable bladder or may be arranged within a peripheral region of the two opposing flexible surfaces. Local un-pressurized areas can thus be created in which a hole can be made in the bladder to feed through a thermocouple sensor or a caul plate suspension rod. A caul plate suspension rod could be used when large caul plates are to be lifted of the product. In that case the caul plate is connected to the upper tool with suspension rods with the bladder in between.

To introduce and remove pressure from the expandable bladder's chamber an inlet and outlet port is provided. Advantageously the inlet/outlet port may be in the form of a pressure coupling extending laterally from the pair of flexible surfaces. In effect a portion of the two surfaces extend laterally outwards from the normal mating surfaces to form an extension tab which may act as a coupling area for the inlet/outlet port. Providing such an extension allows the two flexible surfaces to remain in close proximity to one another all across the caul plate contact area i.e. there is no interruption in contact which would otherwise be needed to accommodate a fluid inlet/outlet port. This advantageously allows the expandable bladder to be located between the caul plate and tooling and in gas or fluid communication with a pressuring system remote from the bladder through the pressure coupling.

The pressure coupling may itself comprise a gas or fluid pressure connection arranged perpendicularly to the plane of the pair of flexible surfaces. In effect the pressure connection extends in the plane of the two flexible surfaces forming the bladder and the connection may advantageously be arranged at approximately 90 degrees to that plane. This allows the bladder to have the lowest height profile whilst allowing for a gas or fluid coupling to be made so as to allow for the ingress and egress of gas or fluid.

Advantageously the sealing weld described above may be a continuous weld which extends around the periphery of the bladder and also the pressure connection portion to surround the coupling which introduces pressurised gas or fluid.

The bladder layers may advantageously be as thin as possible to create near hydrostatic pressure. The lower limit is governed by the possibility to create a tight weld around the perimeter and the handling and durability of the bladder. If the bladder sheets are too thin, welding might be difficult and the bladder becomes too fragile to be reused. Approximately 0.3 mm to approximately 0.5 mm sheets is used. According to the invention a combinations of thicknesses is used. For instance a bladder with approximately 0.3mm sheet contacting the caul plate and approximately 0.5 mm sheet contacting the upper tool may advantageously be used. The thicker sheet provides for bladder handling and the thinner sheet for the hydrostatic pressure.

The lower forming tool may have a geometry and or recesses corresponding to at least part of the geometry of the required consolidated part. For example, in a co-consolidation process for a stringer and aero-surface the lower tool may comprise a recess corresponding to the shape of the stringer and a smooth upper surface corresponding to the desired aero-surface geometry. When co-consolidated the two sub-components may then be consolidated together to form a single integrated part formed of two consolidated sub-parts. It will be recognised that the lower tool (and indeed the upper tool) may be adapted in any suitable way to form a desired final component shape.

The caul plate acts to transfer pressure and force to the stack of thermoplastic plies which are to be consolidated. The caul plate may comprise a first face corresponding to a required geometry of a part and an opposing compression face (an upper surface for example) arranged in use to abut with the expandable bladder. Advantageously, using the combination of caul plate and expandable bladder in this way, caul plates made by galvanic deposition of nickel can be used because the back side of the caul plate does not need to be very accurate in geometry. This is especially attractive for double curved aero surfaces. Only the lower surface which abuts with the stack to be consolidated requires specific geometries corresponding to the desired part shape.

It will be recognised by the person skilled in the art that the lower or upper forming tool may advantageously be arranged to receive a plurality of sub-parts to be co-consolidated together using a variety of tool block, recesses and so forth to form a desired shape.

The upper and or lower tools may further comprise one or more internal conduits to receive a cooling and/or heating fluid, electrical or inductive heating element so as to allow for the control of the temperature of the upper and or lower tools. Thus, the co-consolidation process can be controlled in terms of temperature and pressure over a given consolidation time. Temperatures and pressures may be varied over the consolidation time according to instantaneous feedback and or a predetermined temperature and pressure profile.

In order to optimise temperature inertia of the tools each tool may be provided with one or more recesses or cavities on a non-part facing side of the tool. In effect a plurality of pockets are provided on the back of each tool. This advantageously reduces thermal inertia that would otherwise be the case for a solid tool. This advantageously allows the tool to heat and cool more quickly for a given heating and cooling power. In one arrangement the recesses may form a grid or matrix of recesses with intermediate walls to maintain rigidity.

In one arrangement the bladder and caul plate may be connected to the upper tool to form one package or assembly. Thus, when the upper tool is lifted from the part, both bladder and caul plate are lifted simultaneously. To do so, the caul plate may include suspension rods or the like to connect it to the upper tool through holes in the bladder.

The expandable bladder may, in another arrangement, be formed with a plurality of chambers, each connected to an independent pressure coupling. Thus, different pressures may be applied to different locations across a caul plate at different times. In a still further arrangement a plurality of independent expandable bladders may be provided proximate to one another. Thus, complex shapes and complex consolidation profiles in respect of temperatures, pressures and locations across a part may be realised.

Viewed from another aspect there is provided an out-of-autoclave method as defined in claim 14.

Thus, according to a method described a consolidation process is provided using the consolidation apparatus described above in a specific sequence of steps. Specifically, the expandable bladder is advantageously selectively controlled in combination with a temperature profile to optimise the consolidation or co-consolidation process.

The expansion of the expandable bladder against the caul plate in a predetermined way allows for the replication of the consolidation process within an autoclave in terms of temperatures and pressures. Furthermore, an even pressure may be applied in a controlled way across the entirety of the caul plate which in turn causes a uniform and controlled consolidation pressure on the part or sub-parts forming the part.

The predetermined temperature and pressure sequence may for example include the steps of:
(A) increasing tool temperature continuously to a predetermined temperature Tₘₐₓ;
(B) maintaining tool temperature at a maximum temperature Tₘₐₓ for a predetermined period (TₘₐₓP); and
(C) terminating heating at the end of the predetermined period TₘₐₓP;
the method further comprising the steps of:
(D) applying a first pressure P₁ to the expandable bladder during a consolidation time of T₀ to T₁, applying a second expandable bladder pressure P₂ between a consolidation time of T₁ to T₂ and applying a third expandable bladder pressure P₃ between a consolidation time of T₂ to T₃.

In effect a stepped profile is provided to the pressure on the consolidating part whilst simultaneously increasing the consolidation temperature through the heated tooling.

Specifically the bladder pressure is applied when the temperature of the consolidating material reaches the glass transition temperature (Tg) of the specific material i.e. when the material begins to soften and become more plastic (example: for PEKK this is above 158°C). Advantageously the caul plate can be forced against the consolidating part by means of the expandable bladder without deformation or dents forming in the caul plate.

Upon cool down, the expandable bladder pressure is withdrawn when the product has reached the crystallization temperature (for example: for PEKK this is at 240°C).

The tool may contact heating/cooling press platens at the locations directly above the heating elements and cooling channels in the press platens to optimize heat flow into the tool. Thus, the heat flow into the tool can be optimised.

Advantageously the tool can be moved out of the press after depressurization of the bladder to further cool down to room temperature by any suitable means like ambient air, air blower or cooling plate system. This shortens the press occupation time by >30%, allowing more tools to be processed in a given time.

To fully retract the bladder after depressurization, a vacuum pressure is applied to the inside of the bladder, thus creating the same initial bladder shape for every product. If the bladder remains partially inflated, unintended high pressures can be generated in the next product upon closing of the upper tool.

The method described herein may be used for a variety of components including, but not limited to, the following which form other aspects of inventions described herein:
- Un-stiffened flat or curved parts,
- (grid) stiffened parts with butt joint stiffeners or formed laminate stiffeners
- Flat, single and double curved aero surfaces with or without integrated stiffeners, ribs, spars and frames; and
- I, C or Z beams or ribs or frames with or without stiffeners

PEKK prepreg (pre-impregnated) is made by several manufactures such as Solvay, Toray, Hexcel, Barday. Typical high performance thermoplastic matrices we use are: PEKK, PEEK, LMPAEK and PPS, but any thermoplastic material with any fiber could be used.

Viewed from a still further aspect there is provided a co-consolidation method for a multi-component thermoplastic part as defined in claim 18.

Further aspects of inventions described herein extend to an aerodynamic component formed according to a method described herein.

### Drawings

Aspects of the invention will now be described, by way of example only, with reference to the accompanying figures in which:
Figures 1 and 2 illustrate conventional attempts to provide tooling for out of autoclave consolidation;
Figure 3 illustrates an arrangement according to an apparatus described herein;
Figure 4 corresponds to the arrangement shown in figure 3 with the addition of a caul plate located proximate to the consolidation part;
Figure 5A shows a caul plate and expandable bladder according to an arrangement described herein;
Figure 5B shows a pressure coupling of the expandable bladder shown in figure 5A;
Figure 6 shows an exploded view of the components of an apparatus described herein;
Figure 7 shows the upper surface of the upper tool and thermal mass reducing recesses;
Figure 8 shows a temperature, pressure and time graph for an example consolidation process using the method and apparatus described herein; and
Figure 9 shows a resultant part from a method and apparatus described herein.

While the invention is susceptible to various modifications and alternative forms, specific embodiments are shown by way of example in the drawings and are herein described in detail. It should be understood however that the drawings and detailed description attached hereto are not intended to limit the invention to the particular form disclosed but rather the intention is to cover all modifications, equivalents and alternatives falling within the scope of the claimed invention as defined in the appended claims.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to". The invention is further described with reference to the following examples. It will be appreciated that the invention as claimed is not intended to be limited in any way by these examples.

### Detailed Description

An apparatus and method described herein are concerned with the consolidation of thermoplastic materials in a process which does not require an autoclave. This is known in the art as an 'out-of-autoclave' or OOA process. Specifically, the apparatus and method described herein involves a modified heated tool and expandable bladder arrangement which function together to overcome the problems with existing systems.

There are several problems to overcome when transferring co-consolidation technology from autoclave to a heated press. First, if two hard tools are used in a press, a non-optimal pressure distribution is obtained due to pre-impregnated material and tool tolerances, especially for thin parts. Second, preventing squeeze out of composite material at the part edges is difficult. The configuration of expandable bladder described below removes these issues with existing methods without the use of hydraulic seals. Specifically the use of two 'cres membranes' or layers that are welded at the edges and pressurized with either air or hydraulic fluid function to apply the necessary consolidation pressure.

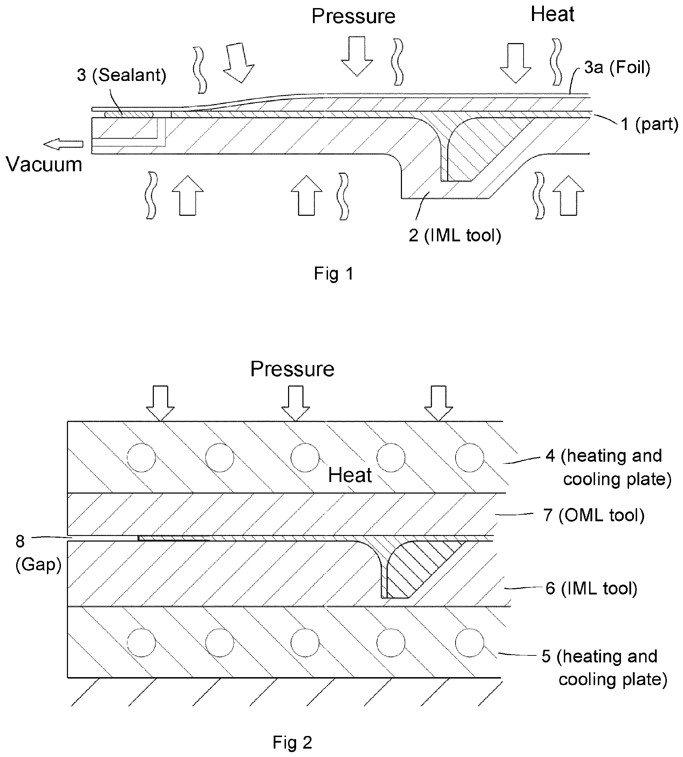

For completeness the principle of conventional thermoplastic part consolidation in an autoclave is shown in figure 1. The part 1 is vacuum bagged on an inner mould line (IML) tool 2 with a high temperature resistant foil (typically Kapton or Aluminium - 3a) and sealed at the edges with an appropriate sealant 3. Both vacuum bag foil and sealant are disposable. Pressure is applied by raising the pressure in the autoclave and remaining gasses are evacuated via a vacuum system. Heat is applied by heating the Air or Nitrogen in the autoclave.

The autoclave process has several disadvantages:
- A large volume of air needs to be compressed and heated up to 400C. This requires a lot of energy;
- The vacuum bag, sealants and breathers are disposable and are waste materials; and
- The cycle time for thermoplastic consolidation is about 6 hours due to heat up and cool down capability, which is less suited for high rate production.

To overcome these disadvantages, the inventor established an alternative method and apparatus for consolidation of thermoplastic parts.

Referring to Figure 2, another example of conventional consolidation is shown.

A flat platen press is used to apply pressure to an unconsolidated laminate stack. In the press two heating / cooling plates (4,5) are mounted. Between these plates a tool set is placed consisting of an IML (inner mould line) 6 and OML (outer mould line) tool 7. Typically, these tools are metallic and rigid.

A temperature cycle is applied by the heating/cooling platens, comprising: heat up to 375°C, a dwell phase at 375°C followed by a cool down phase to solidify the part. This press consolidation method is used to consolidate a stack of flat laminates or plies.

However, the matched metal tools must be very accurate to obtain good pressure and thickness distribution in the part. If the part material has local thickness variations (typically +/- 8%), the matched metal tools will compress the thick parts more than the thin parts, possibly leading to areas with voids or in plane waviness due to sideways movement of plies (plies migrate to areas with lower pressure). Furthermore, the plies can be squeezed out of the laminate stack at the open edges 8 shown in figure 2. Sometimes this is prevented by applying a foil to the edges of the laminate, but this is labour intensive.

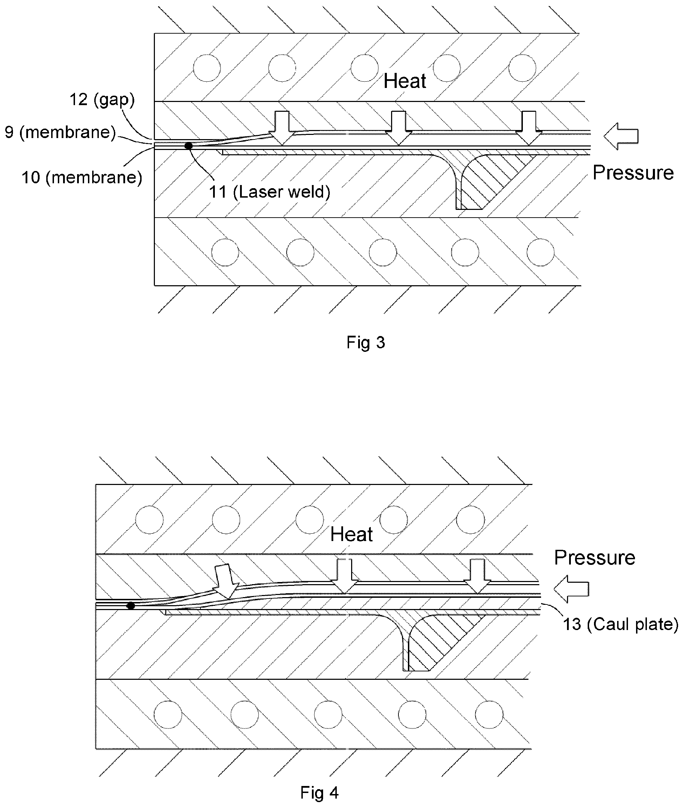

The present invention aims to overcome the high temperature seal problem mentioned above as illustrated with reference to figures 3 and 4.

Specifically the membrane now consists of two thin stainless steel sheets or membranes 9, 10 that are laser welded 11 at the edges (circumference). This creates a bladder (balloon) that can be inflated to generate pressure to the thermoplastic part. This way there is no need for a high temperature seal of the membrane at the edges. In addition, the closing of the upper tool is not critical to guarantee tightness of the bladder. There can be a gap 12 between upper and lower tool since the laser weld is strong enough to withstand the internal pressure.

Figure 4 shows the final system used for co-consolidation of stiffened skins according to an apparatus described herein. A caul plate 13 may be added to have the same pressure distribution and behaviour compared to the autoclave bagging procedure.

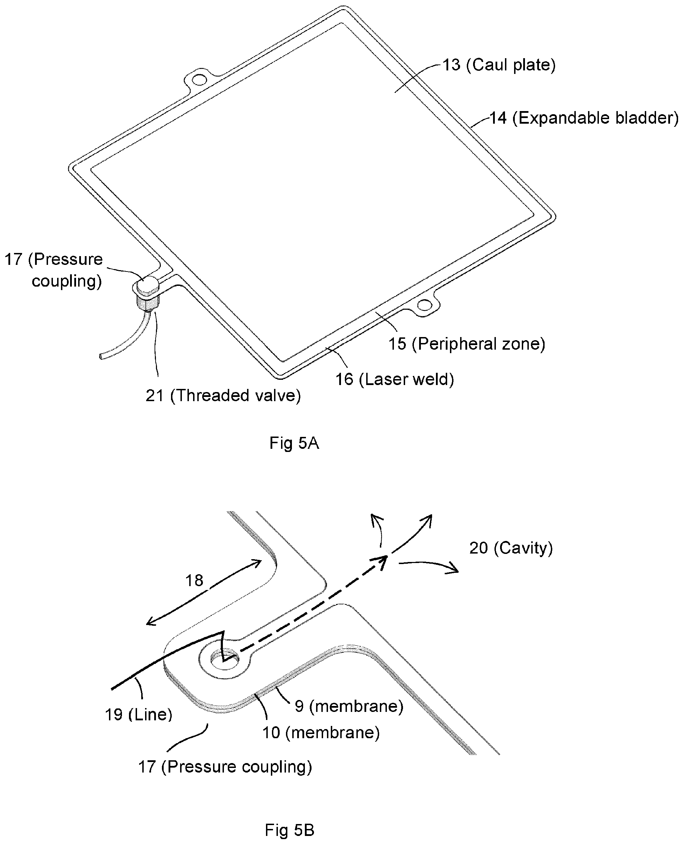

Figures 5A and 5B show an example arrangement of expandable bladder as shown in figure 3 and 4 and the pressure coupling in more detail.

Figure 5A shows the expandable bladder 14 and caul plate 13 which is formed by the steel membrane 9 and steel membrane 10 shown in figure 3. As shown in figure 5A the caul plate is located on top of the expandable bladder with the expandable bladder being larger in area to define a peripheral zone 15 surround the caul plate. The expandable bladder comprises a laser formed weld 16 which is located within the peripheral zone 15 i.e. not within the area over which the caul plate is located.

Figure 5A also illustrates the bladder pressure coupling 17 i.e. the coupling that is used to communicate pressurised fluid or gas into and out of the bladder. As shown a connection is made with the body of the bladder and a conduit is used to communicate fluid or gas from a compressor, pump, bottle or the like to apply the pressure to the bladder.

Figure 5B illustrates the advantageous arrangement of pressure coupling in more detail. Specifically two portions of the bladder membranes 9 and 10 extending into a couple portion or region 18 in the same plane as the two membranes i.e. the portion or region 18 extends outwards and not perpendicular to the membrane surfaces. This ensures that the surfaces of the bladder can be as flat as possible for insert into the tooling and for alignment with the caul plate.

The portion or region 18 may comprise an aperture allowing the flow of fluid or gas in a perpendicular direction into the space between the membranes 9 and 10 as illustrated by the line and dotted line 19. Fluid or gas may then flow along the line 19 and into the cavity 20 within the bladder in such a manner that the bladder can remain as thin as possible. Returning to figure 5A a threaded valve 21 may be used to connect the pipe to the aperture to communicate the fluid or gas as described above.

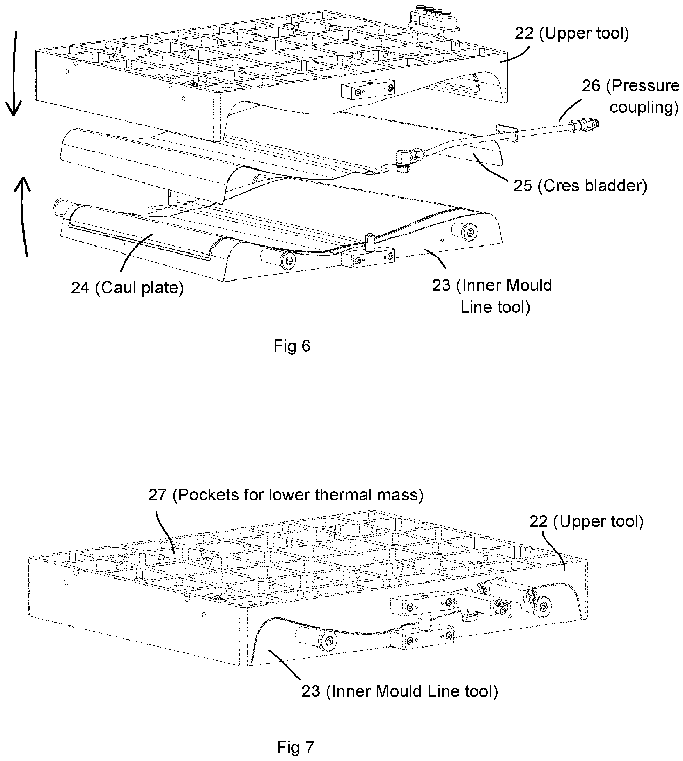

Figure 6 illustrates the configuration of an apparatus before consolidation according to a method and apparatus described herein.

As shown the forming apparatus comprises the upper tool 22 and inner mould line tool 23, the inner mould line tool being the surface defining the lower profile of the shape to be formed or consolidated and against which a stack of thermoplastic plies is arranged or laid.

A stack of thermoplastic layers are laid onto the inner mould line tool 23 to form a thermoplastic stack or laminate and the caul plate 24 is then positioned on top of the stack. The caul plate has a lower surface that defines the profile of the desire part shape once consolidated and as such is precisely machined or formed. The upper surface of the caul plate does not require precision machining and is arranged to receive pressure from the expandable bladder or cres membrane 25. As shown the cres membrane or expandable bladder 25 is connected to the pressure coupling 26.

The upper tool is then located on top of the expandable bladder and the entire formation is placed in a press to secure the individual components shown in figure 6 together and in position.

Figure 7 illustrates the upper surface of the upper tool 22. As shown in figure 7 the upper tool is located on the lower tool/IML tool 23. Figure 7 illustrates the recesses of pockets 27 located in the upper surface of the upper tool. The purpose of the recesses is to improve the heating and cooling time of the tool by lowering the thermal mass. This advantageously allows the part to be removed from the press more quickly and another cycle restarted. This maximised manufacturing throughput.

The mass of the tool is lowered by about 50% by applying pockets at the back side. The thermal cycle therefore require less heating and cooling power resulting in a lower cost heating and cooling system. The arrangement of the pockets advantageously is such that the ribs correspond to heating and cooling channel locations in the press platens, for optimized heat up and cool down speed.

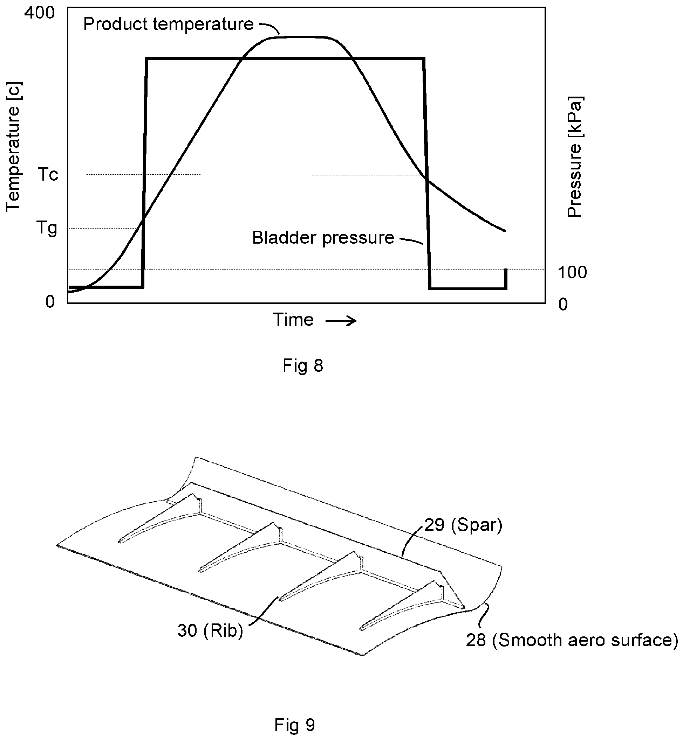

Figure 8 illustrates one example temperature and pressure profile for a consolidation using an apparatus and method described herein.

As shown there are 3 separate pressures used during the consolidate cycle and a 3 separate heating cooling periods.

The process starts with a certain vacuum evacuation pressure on the bladder, which is applied to fully retract the bladder. This prevents excessive forces on the caul plate coming from the unconsolidated part, which can permanently deform the caul plate. The tool is heated and once the part temperature is above the Tg of the thermoplastic matrix material, the material softens and the pressure in the bladder is increased to consolidation pressure. This also protects the caul plate from dents. If the part reaches the consolidation temperature, the temperature is kept constant for the required consolidation time. Next, the part is cooled and when the part temperature is lower than the Tc (crystallization temperature) of the thermoplastic matrix material, the bladder pressure is released and vacuum pressure is applied, so the bladder retracts. This allows the part to release itself upon further cool down due to thermal stress created by the expansion difference between part and tool. Once the temperature is below the Tc and bladder pressure is released, the tool can be moved out of the press.

Figure 9 illustrates a co-consolidated part using a method and apparatus described herein. The resulting part has a contoured and smooth aero surface 28 with a spar 29 and rib 30 that are co-consolidated to the aero surface. As shown a complex curved component can be formed using the expandable bladder and tooling arrangement described herein without the need for an autoclave.

## Claims

1. An out-of-autoclave thermoplastic consolidation apparatus comprising an upper forming tool (22) and an opposing lower forming tool (23), the upper forming tool and lower forming tools defining a space there between for forming a part, the apparatus further comprising:
(i) a removable caul plate (24) arrangeable between the upper and lower forming tools and in contact with a surface of a part to be consolidated; and
(ii) an expandable bladder arrangeable between the removable caul plate and the upper tool,
wherein the expandable bladder (25) extends across the caul plate and comprises a pair of opposing flexible surfaces and a peripherally extending seal, wherein the flexible surfaces are between approximately 0.3mm to approximately 0.5mm in thickness, and the flexible surfaces are of dissimilar thicknesses.

2. An apparatus as claimed in claim 1, wherein the expandable bladder is in the form of two opposing layers defining an expansion chamber there between and further comprising an inlet/outlet port in fluid or gas communication with the expansion chamber to allow for fluid or gas ingress and egress to/from the chamber.

3. An apparatus as claimed in claim 2, wherein the opposing layers are metallic layers.

4. An apparatus as claimed in claim 3, wherein the metallic layers are formed of a material selected from stainless steel, steel, plated steel, Invar steel or titanium.

5. An apparatus as claimed in any preceding claim, wherein the expandable bladder comprises a weld extending around the periphery of the bladder to seal the expansion chamber.

6. An apparatus as claimed in claim 5, wherein the weld is a laser formed weld extending around the periphery of the bladder and inlet/outlet port.

7. An apparatus as claimed in claim 6, wherein the inlet/outlet port is in the form of a pressure coupling extending laterally from the pair of flexible surfaces, the pressure coupling comprising a fluid or gas pressure connection arranged perpendicularly to the plane of the pair of flexible surfaces and wherein the weld extends around the perimeter of the pressure coupling to surround the fluid or gas pressure connection.

8. An apparatus as claimed in any preceding claim wherein the lower forming tool has a geometry and or recesses corresponding to at least part of the geometry of the required consolidated part.

9. An apparatus as claimed in any preceding claim, wherein the caul plate comprises a first face corresponding to a required geometry of a part and an opposing compression face arrangeable to abut with the expandable bladder.

10. An apparatus as claimed in any preceding claim, wherein the lower or upper forming tool is arranged to receive a plurality of sub-parts to be co-consolidated together.

11. An apparatus as claimed in any preceding claim, wherein the upper and or lower tools comprise one or more internal conduits to receive a cooling and/or heating fluid, electrical or inductive elements so as to allow for the control of the temperature of the upper and or lower tools.

12. An apparatus as claimed in any preceding claim, wherein the upper and or lower tools comprise one or more recesses on a non-part facing side of the tool to lower the thermal mass of the tool.

13. An apparatus as claimed in any preceding claim wherein the tool contacts heating/cooling press platens at the locations directly above the heating elements and cooling channels in the press.

14. An out-of-autoclave method of consolidating a thermoplastic part using a consolidating apparatus, the consolidating apparatus comprising an upper forming tool (22) and an opposing lower forming tool (23), the upper forming tool and lower forming tools defining a space therebetween for forming a part, the apparatus further comprising:
(i) a removable caul plate (24) arrangeable between the upper and lower forming tools and in contact with a surface of a part to be consolidated; and
(ii) an expandable bladder (25) arrangeable between the removable caul plate and the upper tool, wherein the expandable bladder extends across the caul plate and comprises a pair of opposing flexible surfaces and a peripherally extending seal, wherein the flexible surfaces are between approximately 0.3mm to approximately 0.5mm in thickness, and the flexible surfaces are of dissimilar thicknesses;
the method comprising the steps of:
(A) laying a plurality of thermoplastic containing plies onto the lower tool to form a stack,
(B) positioning the caul plate onto the upper surface of the stack,
(C) positioning the expandable bladder onto the upper surface of the caul plate,
(D) positioning the upper tool onto the upper surface of the expandable bladder,
(E) selectively heating and cooling the upper and/or lower tools and simultaneously selectively applying pressure to the expandable bladder to bias the caul plate against the stack according to a predetermined temperature and pressure sequence.

15. A method as claimed in claim 14, wherein the predetermined temperature and pressure sequence includes the steps of:
(A) increasing tool temperature continuously to a predetermined temperature Tₘₐₓ;
(B) maintaining tool temperature at a maximum temperature Tₘₐₓ for a predetermined period (TₘₐₓP); and
(C) terminating heating at the end of the predetermined period TₘₐₓP;
the method further comprising the steps of:
(D) applying a first pressure P₁ to the expandable bladder during a consolidation time of T₀ to T₁, applying a second expandable bladder pressure P₂ between a consolidation time of T₁ to T₂ and applying a third expandable bladder pressure P₃ between a consolidation time of T₂ to T₃.

16. A method as claimed in claim 15, wherein the first pressure P₁ is applied when the temperature of the thermoplastic exceeds the T_{g} temperature of the thermoplastic.

17. A method as claimed in any of claims 15 or 16, wherein the third expandable bladder pressure P₃ is applied after consolidation time T₂

18. A co-consolidation method for a multi-component thermoplastic part, the method using an apparatus comprising an upper forming tool (22) and an opposing lower forming tool (23), the upper forming tool and lower forming tools defining a space therebetween for forming the multi-component thermoplastic part, the apparatus further comprising:
(i) a removable caul plate (24) arrangeable between the upper and lower forming tools and in contact with a surface of a part to be consolidated; and
(ii) an expandable bladder (25) arrangeable between the removable caul plate and the upper tool, wherein the expandable bladder extends across the caul plate and comprises a pair of opposing flexible surfaces and a peripherally extending seal, wherein the flexible surfaces are between approximately 0.3mm to approximately 0.5mm in thickness, and the flexible surfaces are of dissimilar thicknesses;
the co-consolidation method comprising the steps of:
(A) laying or positioning thermoplastic plies defining a first sub-component onto the first forming tool and/or into recesses in the first forming tool;
(B) laying a plurality of thermoplastic containing plies against the plies forming the first sub-component and onto the lower tool to form an unconsolidated multi-component stack,
(C) positioning the caul plate onto the upper surface of the stack,
(D) positioning the expandable bladder onto the upper surface of the caul plate,
(E) positioning the upper tool onto the upper surface of the expandable bladder,
(F) selectively heating and cooling the upper and/or lower tools and simultaneously selectively applying pressure to the expandable bladder to bias the caul plate against the stack according to a predetermined temperature and pressure sequence.

## Patentansprüche

1. Autoklavenexterne Thermoplastkonsolidierungsvorrichtung, die ein oberes Formungswerkzeug (22) und ein gegenüberliegendes unteres Formungswerkzeug (23) umfasst, wobei das obere Formungswerkzeug und das untere Formungswerkzeuge einen Raum dazwischen zum Formen eines Teils definieren und die Vorrichtung ferner Folgendes umfasst:
(i) ein abnehmbares Pressblech (24), das zwischen dem oberen und dem unteren Formungswerkzeug anordenbar ist und mit einer Oberfläche eines Teils, das konsolidiert werden soll, in Kontakt ist; und
(ii) eine ausdehnbare Blase, die zwischen dem abnehmbaren Pressblech und dem oberen Werkzeug anordenbar ist, wobei die ausdehnbare Blase (25) über das Pressblech verläuft und ein Paar gegenüberliegender flexibler Oberflächen und eine peripher verlaufende Dichtung umfasst, die flexiblen Oberflächen eine Dicke im Bereich von etwa 0,3 mm bis etwa 0,5 mm aufweisen und die flexiblen Oberflächen unähnliche Dicken aufweisen.

2. Vorrichtung nach Anspruch 1, wobei die ausdehnbare Blase die Form zwei gegenüberliegender Schichten aufweist, die eine Ausdehnungskammer dazwischen definieren, und ferner einen Einlass-/Aulassanschluss in Fluid- oder Gaskommunikation mit der Ausdehnungskammer umfasst, um einen Eintritt und einen Austritt eines Fluids oder eines Gases in die/aus der Kammer zu ermöglichen.

3. Vorrichtung nach Anspruch 2, wobei die gegenüberliegenden Schichten Metallschichten sind.

4. Vorrichtung nach Anspruch 3, wobei die Metallschichten aus einem Material gebildet sind, das aus Edelstahl, Stahl, beschichtetem Stahl, Invarstahl oder Titan gewählt ist.

5. Vorrichtung nach einem vorhergehenden Anspruch, wobei die ausdehnbare Blase eine Schweißnaht umfasst, die um den Umfang der Blase verläuft, um die Ausdehnungskammer zu versiegeln.

6. Vorrichtung nach Anspruch 5, wobei die Schweißnaht eine lasergeformte Schweißnaht ist, die um den Umfang der Blase und den Einlass-/Aulassanschluss verläuft.

7. Vorrichtung nach Anspruch 6, wobei der Einlass-/Aulassanschluss die Form einer Druckkopplung aufweist, die vom Paar flexibler Oberflächen seitlich verläuft, die Druckkopplung eine Fluid- oder Gasdruckverbindung umfasst, die zur Ebene des Paars flexibler Oberflächen senkrecht angeordnet ist, und die Schweißnaht um den Umfang der Druckkopplung verläuft, um die Fluid- oder Gasdruckverbindung zu umgeben.

8. Vorrichtung nach einem vorhergehenden Anspruch, wobei das untere Formungswerkzeug eine Geometrie und/oder Aussparungen aufweist, die mindestens einem Teil der Geometrie des erforderlichen konsolidierten Teils entsprechen.

9. Vorrichtung nach einem vorhergehenden Anspruch, wobei das Pressblech eine erste Fläche, die einer erforderlichen Geometrie eines Teils entspricht, und eine gegenüberliegende Komprimierungsfläche, die derart anordenbar ist, dass sie an der ausdehnbaren Blase anliegt, umfasst.

10. Vorrichtung nach einem vorhergehenden Anspruch, wobei das untere oder das obere Formungswerkzeug derart angeordnet ist, dass es mehrere Unterteile, die miteinander kokonsolidiert werden sollen, aufnimmt.

11. Vorrichtung nach einem vorhergehenden Anspruch, wobei die oberen und/oder unteren Werkzeuge eine oder mehrere interne Leitungen, um ein Kühl- und/oder Heizfluid aufzunehmen, elektrische Elemente oder induktive Elemente umfassen, um die Steuerung der Temperatur des oberen und/oder des unteren Werkzeugs zu ermöglichen.

12. Vorrichtung nach einem vorhergehenden Anspruch, wobei das obere und/oder das untere Werkzeug eine oder mehrere Aussparungen auf einer nicht dem Teil zugewandten Seite des Werkzeugs umfassen, um die thermische Masse des Werkzeugs zu verringern.

13. Vorrichtung nach einem vorhergehenden Anspruch, wobei das Werkzeug Heiz-/Kühlpresswalzen bei den Orten direkt über den Heizelementen und den Kühlkanälen in der Presse berührt.

14. Autoklavenexternes Verfahren zum Konsolidieren eines Thermoplastteils unter Verwendung einer Konsolidierungsvorrichtung, wobei die Konsolidierungsvorrichtung ein oberes Formungswerkzeug (22) und ein gegenüberliegendes unteres Formungswerkzeug (23) umfasst, das obere Formungswerkzeug und das untere Formungswerkzeuge einen Raum dazwischen zum Formen eines Teils definieren und die Vorrichtung ferner Folgendes umfasst:
(i) ein abnehmbares Pressblech (24), das zwischen dem oberen und dem unteren Formungswerkzeug anordenbar ist und mit einer Oberfläche eines Teils, das konsolidiert werden soll, in Kontakt ist; und
(ii) eine ausdehnbare Blase (25), die zwischen dem abnehmbaren Pressblech und dem oberen Werkzeug anordenbar ist, wobei die ausdehnbare Blase über das Pressblech verläuft und ein Paar gegenüberliegender flexibler Oberflächen und eine peripher verlaufende Dichtung umfasst, die flexiblen Oberflächen eine Dicke im Bereich von etwa 0,3 mm bis etwa 0,5 mm aufweisen und die flexiblen Oberflächen unähnliche Dicken aufweisen; wobei das Verfahren die folgenden Schritte umfasst:
(A) Legen von mehreren thermoplasthaltigen Lagen auf das untere Werkzeug, um einen Stapel zu Formen,
(B) Positionieren des Pressblechs auf der oberen Oberfläche des Stapels,
(C) Positionieren der ausdehnbaren Blase auf der oberen Oberfläche des Pressblechs,
(D) Positionieren des oberen Werkzeugs auf der oberen Oberfläche der ausdehnbaren Blase und
(E) wahlweises Erhitzen und Kühlen des oberen und/oder des unteren Werkzeugs und gleichzeitiges wahlweises Ausüben eines Drucks auf die ausdehnbare Blase, um das Pressblech gegen den Stapel gemäß einer vorgegebenen Temperatur- und Druckabfolge vorzubelasten.

15. Verfahren nach Anspruch 14, wobei die vorgegebene Temperatur- und Druckabfolge die folgenden Schritte umfasst:
(A) kontinuierliches Erhöhen der Werkzeugtemperatur zu einer vorgegebenen Temperatur Tₘₐₓ;
(B) Halten der Werkzeugtemperatur bei einer Höchsttemperatur Tₘₐₓ für einen vorgegebenen Zeitraum (TₘₐₓP); und
(C) Beenden des Erhitzens am Ende des vorgegebenen Zeitraums TₘₐₓP;
wobei das Verfahren ferner die folgenden Schritte umfasst:
(D) Ausüben eines ersten Drucks P₁ auf die ausdehnbare Blase während einer Konsolidierungszeit von T₀ bis T₁, Ausüben eines zweiten ausdehnbaren Blasendrucks P₂ zwischen einer Konsolidierungszeit von T₁ bis T₂ und Ausüben eines dritten ausdehnbaren Blasendrucks P₃ zwischen einer Konsolidierungszeit von T₂ bis T₃.

16. Verfahren nach Anspruch 15, wobei der erste Druck P₁ ausgeübt wird, wenn die Temperatur des Thermoplasts die T_{g}-Temperatur des Thermoplasts überschreitet.

17. Verfahren nach einem der Ansprüche 15 oder 16, wobei der dritte ausdehnbare Blasendruck P₃ nach der Konsolidierungszeit T₂ ausgeübt wird.

18. Kokonsolidierungsverfahren für ein Mehrkomponententhermoplastteil, wobei das Verfahren eine Vorrichtung verwendet, die ein oberes Formungswerkzeug (22) und ein gegenüberliegendes unteres Formungswerkzeug (23) umfasst, das obere Formungswerkzeug und untere Formungswerkzeuge einen Raum dazwischen zum Formen des Mehrkomponententhermoplastteils definieren und die Vorrichtung ferner Folgendes umfasst:
(i) ein abnehmbares Pressblech (24), das zwischen dem oberen und dem unteren Formungswerkzeug anordenbar ist und mit einer Oberfläche eines Teils, das konsolidiert werden soll, in Kontakt ist; und
(ii) eine ausdehnbare Blase (25), die zwischen dem abnehmbaren Pressblech und dem oberen Werkzeug anordenbar ist, wobei die ausdehnbare Blase über das Pressblech verläuft und ein Paar gegenüberliegender flexibler Oberflächen und eine peripher verlaufende Dichtung umfasst, die flexiblen Oberflächen eine Dicke im Bereich von etwa 0,3 mm bis etwa 0,5 mm aufweisen und die flexiblen Oberflächen unähnliche Dicken aufweisen; wobei das Kokonsolidierungsverfahren die folgenden Schritte umfasst:
(A) Legen oder Positionieren von Thermoplastlagen, die eine erste Unterkomponente definieren, auf das erste Formungswerkzeug und/oder in Aussparungen im ersten Formungswerkzeug;
(B) Legen von mehreren thermoplasthaltigen Lagen gegen die Lagen, die die erste Unterkomponente Formen, und auf das Unterwerkzeug, um einen unkonsolidierten Mehrkomponentenstapel zu Formen,
(C) Positionieren des Pressblechs auf der oberen Oberfläche des Stapels,
(D) Positionieren der ausdehnbaren Blase auf der oberen Oberfläche des Pressblechs,
(E) Positionieren des oberen Werkzeugs auf der oberen Oberfläche der ausdehnbaren Blase und
(F) wahlweises Erhitzen und Kühlen des oberen und/oder des unteren Werkzeugs und gleichzeitiges wahlweises Ausüben eines Drucks auf die ausdehnbare Blase, um das Pressblech gegen den Stapel gemäß einer vorgegebenen Temperatur- und Druckabfolge vorzubelasten.

## Revendications

1. Appareil de consolidation hors autoclave de matière thermoplastique, comprenant un outil de formage supérieur (22) et un outil de formage inférieur (23) opposé, les outils de formage supérieur et inférieur définissant entre eux un espace pour la formation d'une pièce, l'appareil comprenant en outre :
(i) une plaque de conformation amovible (24) susceptible d'être agencée entre les outils de formage supérieur et inférieur et en contact avec une surface d'une pièce à consolider ; et
(ii) une vessie expansible susceptible d'être agencée entre la plaque de conformation amovible et l'outil supérieur,
la vessie expansible (25) s'étendant de part en part de la plaque de conformation et comprenant une paire de surfaces flexibles opposées et un joint d'étanchéité s'étendant périphériquement, les surfaces flexibles présentant une épaisseur comprise entre environ 0,3 mm et environ 0,5 mm, et les surfaces flexibles présentant des épaisseurs différentes les unes des autres.

2. Appareil selon la revendication 1, dans lequel la vessie expansible se présente sous la forme de deux couches opposées définissant entre elles une chambre d'expansion et comprenant en outre un orifice d'entrée/sortie en communication fluidique ou gazeuse avec la chambre d'expansion afin de permettre l'admission et l'évacuation de fluide ou de gaz vers/depuis la chambre.

3. Appareil selon la revendication 2, dans lequel les couches opposées sont des couches métalliques.

4. Appareil selon la revendication 3, dans lequel les couches métalliques sont formées d'un matériau choisi parmi l'acier inoxydable, l'acier, l'acier plaqué, l'acier Invar ou le titane.

5. Appareil selon l'une quelconque des revendications précédentes, dans lequel la vessie expansible comprend une soudure s'étendant autour de la périphérie de la vessie afin d'assurer l'étanchéité de la chambre d'expansion.

6. Appareil selon la revendication 5, dans lequel la soudure est une soudure formée au laser s'étendant autour de la périphérie de la vessie et de l'orifice d'entrée/sortie.

7. Appareil selon la revendication 6, dans lequel l'orifice d'entrée/sortie se présente sous la forme d'un accouplement de pression s'étendant latéralement depuis la paire de surfaces flexibles, l'accouplement de pression comprenant un raccord de pression de fluide ou de gaz agencé perpendiculairement au plan de la paire de surfaces flexibles, et dans lequel la soudure s'étend autour du périmètre de l'accouplement de pression pour entourer le raccord de pression de fluide ou de gaz.

8. Appareil selon l'une quelconque des revendications précédentes, dans lequel l'outil de formage inférieur présente une géométrie et/ou des renfoncements correspondant à au moins une partie de la géométrie de la pièce consolidée requise.

9. Appareil selon l'une quelconque des revendications précédentes, dans lequel la plaque de conformation comprend une première face correspondant à une géométrie requise d'une pièce et une face de compression opposée susceptible d'être agencée de manière à venir en appui contre la vessie expansible.

10. Appareil selon l'une quelconque des revendications précédentes, dans lequel l'outil de formage inférieur ou supérieur est agencé de manière à recevoir une pluralité de sous-pièces à co-consolider ensemble.

11. Appareil selon l'une quelconque des revendications précédentes, dans lequel les outils supérieur et/ou inférieur comprennent un ou plusieurs conduits internes pour recevoir un fluide de refroidissement et/ou de chauffage, des éléments électriques ou inductifs afin de permettre la régulation de la température des outils supérieur et/ou inférieur.

12. Appareil selon l'une quelconque des revendications précédentes, dans lequel les outils supérieur et/ou inférieur comprennent un ou plusieurs renfoncements sur un côté de l'outil qui n'est pas en regard de la pièce afin d'abaisser la masse thermique de l'outil.

13. Appareil selon l'une quelconque des revendications précédentes, dans lequel l'outil entre en contact avec des plateaux de presse de chauffage/refroidissement aux emplacements directement au-dessus des éléments chauffants et des canaux de refroidissement dans la presse.

14. Procédé de consolidation hors autoclave d'une pièce en matière thermoplastique au moyen d'un appareil de consolidation, l'appareil de consolidation comprenant un outil de formage supérieur (22) et un outil de formage inférieur (23) opposé, les outils de formage supérieur et inférieur définissant entre eux un espace pour la formation d'une pièce, l'appareil comprenant en outre :
(i) une plaque de conformation amovible (24) susceptible d'être agencée entre les outils de formage supérieur et inférieur et en contact avec une surface d'une pièce à consolider ; et
(ii) une vessie expansible (25) susceptible d'être agencée entre la plaque de conformation amovible et l'outil supérieur, la vessie expansible s'étendant de part en part de la plaque de conformation et comprenant une paire de surfaces flexibles opposées et un joint d'étanchéité s'étendant périphériquement, les surfaces flexibles présentant une épaisseur comprise entre environ 0,3 mm et environ 0,5 mm, et les surfaces flexibles présentant des épaisseurs différentes ;
le procédé comprend les étapes suivantes :
(A) dépose d'une pluralité de nappes contenant de la matière thermoplastique sur l'outil inférieur afin de former un empilement,
(B) positionnement de la plaque de conformation sur la surface supérieure de l'empilement,
(C) positionnement de la vessie expansible sur la surface supérieure de la plaque de conformation,
(D) positionnement de l'outil supérieur sur la surface supérieure de la vessie expansible,
(E) chauffage et refroidissement sélectifs des outils supérieur et/ou inférieur et application sélective et simultanée d'une pression sur la vessie expansible afin de solliciter la plaque de conformation contre l'empilement selon une séquence prédéterminée de température et de pression.

15. Procédé selon la revendication 14, dans lequel la séquence prédéterminée de température et de pression comporte les étapes suivantes :
(A) augmentation continue de la température de l'outil jusqu'à une température prédéterminée Tₘₐₓ ;
(B) maintien de la température de l'outil à une température maximale Tₘₐₓ pendant une période prédéterminée (TₘₐₓP) ; et
(C) arrêt du chauffage à la fin de la période prédéterminée TₘₐₓP ;
le procédé comprenant en outre les étapes suivantes :
(D) application d'une première pression P₁ sur la vessie expansible pendant un temps de consolidation de T₀ à T₁, application d'une deuxième pression P₂ sur la vessie expansible pendant un temps de consolidation de T₁ à T₂ et application d'une troisième pression P₃ sur la vessie expansible pendant un temps de consolidation de T₂ à T₃.

16. Procédé selon la revendication 15, dans lequel la première pression P₁ est appliquée lorsque la température de la matière thermoplastique dépasse la température T_{g} de la matière thermoplastique.

17. Procédé selon l'une quelconque des revendications 15 ou 16, dans lequel la troisième pression P₃ sur la vessie expansible est appliquée après le temps de consolidation T₂.

18. Procédé de co-consolidation pour une pièce multi-composant en matière thermoplastique, le procédé utilisant un appareil comprenant un outil de formage supérieur (22) et un outil de formage inférieur (23) opposé, les outils de formage supérieur et inférieur définissant entre eux un espace pour la formation de la pièce multi-composant en matière thermoplastique, l'appareil comprenant en outre :
(i) une plaque de conformation amovible (24) susceptible d'être agencée entre les outils de formage supérieur et inférieur et en contact avec une surface d'une pièce à consolider ; et
(ii) une vessie expansible (25) susceptible d'être agencée entre la plaque de conformation amovible et l'outil supérieur, la vessie expansible s'étendant de part en part de la plaque de conformation et comprenant une paire de surfaces flexibles opposées et un joint d'étanchéité s'étendant périphériquement, les surfaces flexibles présentant une épaisseur comprise entre environ 0,3 mm et environ 0,5 mm, et les surfaces flexibles présentant des épaisseurs différentes ;
le procédé de co-consolidation comprenant les étapes suivantes :
(A) dépose ou positionnement de nappes de matière thermoplastique définissant un premier sous-composant sur le premier outil de formage et/ou dans des renfoncements dans le premier outil de formage ;
(B) dépose d'une pluralité de nappes contenant de la matière thermoplastique contre les nappes formant le premier sous-composant et sur l'outil inférieur afin de former un empilement multi-composant non consolidé,
(C) positionnement de la plaque de conformation sur la surface supérieure de l'empilement,
(D) positionnement de la vessie expansible sur la surface supérieure de la plaque de conformation,
(E) positionnement de l'outil supérieur sur la surface supérieure de la vessie expansible,
(F) chauffage et refroidissement sélectifs des outils supérieur et/ou inférieur et application sélective et simultanée d'une pression sur la vessie expansible afin de solliciter la plaque de conformation contre l'empilement selon une séquence prédéterminée de température et de pression.
